# EUROPEAN PATENT SPECIFICATION

(11) **EP 2 653 358 B1**
(45) Date of publication and mention of the grant of the patent: **14.01.2015**
(21) Application number: 13002034.0
(22) Date of filing: 18.04.2013
(51) Int. Cl.: B60S 3/00, B60S 3/04

(54) **Wheel washing machine**
Radwaschmaschine
Machine à laver de roue

(30) Priority: 19.04.2012 IT MO20120103
(43) Date of publication of application: 23.10.2013
(73) Proprietor: TECO S.R.L., 42015 Correggio (RE) (IT)
(72) Inventor: Barbetti, Mauro, 42015 Correggio (Reggio Emilia) (IT); Barbetti, Michele, 42015 Correggio (Reggio Emilia) (IT); Pellacani, Gianfranco, 42015 Correggio (Reggio Emilia) (IT); Iotti, Roberto, 42015 Correggio (Reggio Emilia) (IT)
(74) Representative: Bergamini, Silvio

(56) References cited:
- EP-A1- 0 338 509
- WO-A1-90/11210
- WO-A2-2005/120913
- DE-A1-102005 009 876
- DE-U1- 20 110 008

## Description

### Field of the invention

The invention relates to a wheel washing machine, which is generally designed for automatically washing and drying vehicle wheels.

### Background art

Machines for washing vehicle wheels and drying them after the washing cycle have been long known.

Typically, a prior art wheel washing machine is composed of a box-like frame, having a recovery tank at the bottom, and a washing chamber defined thereabove, for receiving a wheel to be washed in a vertical position.

The bottom of the washing chamber communicates with the underlying recovery tank.

Two transverse, parallel and horizontal support rollers are mounted in the washing chamber, close to the bottom thereof, and above the recovery tank, one of such rollers being rotatably supported as a powered roller, and the other being supported as an idler roller, said rollers being designed to provide support to a wheel to be washed, which is disposed with its center axis substantially parallel to the two rollers.

As the motor unit that is connected to the powered roller is actuated by an operator, the powered roller drives the wheel to be washed into rotation by adhesion with the tire tread, and causes it to rotate substantially about its center axis.

Spray nozzles are mounted to special support flanges at each side, i.e. close to the side walls that delimit the washing chamber, said nozzles being used to spray pressurized washing liquids and being adapted to be oriented toward the wheel.

In addition to these spray nozzles, blow nozzles are also provided, for blowing compressed air or another pressurized fluid to dry the wheels, and also adapted to be oriented toward the wheels at predetermined angles of incidence to the two side surfaces of the wheel.

Retaining rollers are also provided in the washing chamber close to its side walls, said rollers being idly mounted, with axes of rotation substantially perpendicular to the wheel axis, their outer surfaces allowing the wheel to be held in a substantially vertical position as it rotates during the washing and drying steps, and preventing it from tilting and hitting the walls of the washing chamber, especially at the start or the end of its rotation, i.e. when it has a poor balance due to the lower polar moment about the axis of rotation.

The washing chamber has a substantially parallelepiped shape and is peripherally closed at the sides and top.

A front door is provided for access and introduction or removal of wheels.

At the bottom, as mentioned above, the washing chamber has apertures for communication with the underlying tank which collects the washing liquid pouring down from the wheel as well as the dirt residues removed from its surfaces.

The frame of the wheel washing machine also has an appendage, or additional part, which is typically located at the side of the recovery tank and the washing chamber, in which all the devices that cooperate to the operation of the machine are received and protected.

During washing, a pressurized water and cleanser mixture accumulated in a reservoir specially designed therefor in the frame and connected by pipes to the spray nozzles, is sprayed by the action of a pump to the two faces of a wheel disposed in a vertical position in the washing chamber, with the tire tread on the two transverse support rollers.

While the washing liquid is being sprayed, the wheel is driven into rotation such that, as it rotates, every part of it repeatedly passes before the spraying nozzles, which are oriented beforehand such that their jets impinge upon the wheel surfaces at predetermined angles of incidence, to obtain a higher impact force and hence a better washing effect.

Likewise, once the washing step has been completed, the drying nozzles are operated, such nozzles being also located at each side of the wheel with such an orientation as to hit the surfaces with air jets at predetermined angles, for the residual washing water to be pushed away from the wheel surfaces, i.e. the rim and tire surfaces.

Nevertheless, this prior art has the drawback that, during drying, the compressed air jets that are simultaneously blown from the two opposed sides of the washing chamber toward the two corresponding vertical faces of the wheel, especially the surfaces of the rim disk and the intrados of its channel, tend to generate deflected and disturbed flows, due to the substantially opposite directions in which they flow toward each other.

These deflections considerably decrease the drying effectiveness, because air jets lose their force as they divide into directional components both perpendicular and tangent to the surfaces to be hit, such decreased effectiveness being reflected in undesirably longer times to complete this step, which both requires a higher power consumption and decreases the number of wheels that can be washed and dried in a predetermined time, e.g. a working day.

This occurs because the perpendicular components of air jets flow through the holes of the rims, or through the spikes (in case of special rims or alloy rims), as the wheel rotates, to the opposite side thereof, and interfere with the directly opposed air jets.

Document WO 90/11210 Al discloses a tyre washing machine according to the preamble of claim 1.

### 15 Disclosure of the invention

One object of the invention is to improve the prior art.

A further object of the invention is to obviate the above drawback, by providing a wheel washing machine that affords quick and thorough drying of wheels.

Yet another object of the invention is to provide a wheel washing machine that requires no particular structural change to improve drying of washed wheels.

In one aspect the invention relates to a wheel washing machine as defined in the features of claim 1.

The invention affords the following advantages:
- generally improved drying of the washed wheels; and
- reduced drying times.

### Brief description of the drawings

Further characteristics and advantages of the invention will be more apparent upon reading of the detailed description of one preferred, non-exclusive embodiment of a wheel washing machine of the invention, which is illustrated by way of example and without limitation in the annexed drawings, in which:
FIG. 1 is a general perspective view of a wheel washing machine of the invention;
FIG. 2 is a schematic top view of the wheel washing machine of Figure 1;
FIG. 3 is a detail view of a lower portion of a wheel as it is being dried by simultaneous jets of drying fluid, according to the prior art;
FIG. 4 is a view of a pneumatic diagram of a first possible embodiment of a system for actuating the drying units of the wheel washing machine of the invention, in a configuration in which drying is stopped;
FIG. 5 is a view of the diagram of Figure 4, in a configuration in which a first drying unit is actuated;
FIG. 6 is a view of the diagram of Figure 4, in a configuration in which a second drying unit is actuated;
FIG. 7 is a view of a second possible embodiment of a system for actuating the drying units of the wheel washing machine of the invention, in a configuration in which drying is stopped;
FIG. 8 is a view of the diagram of Figure 7, in a configuration in which a first drying unit is actuated;
FIG. 9 is a view of the diagram of Figure 7, in a configuration in which a second drying unit is actuated;
FIG. 10 is a view of a third possible embodiment of a system for actuating the drying units of the wheel washing machine of the invention, in a configuration in which drying is stopped;
FIG. 11 is a view of the diagram of Figure 10, in a configuration in which a first drying unit is actuated;
FIG. 12 is a view of the diagram of Figure 10, in a configuration in which a second drying unit is actuated.

### Detailed description of a preferred embodiment

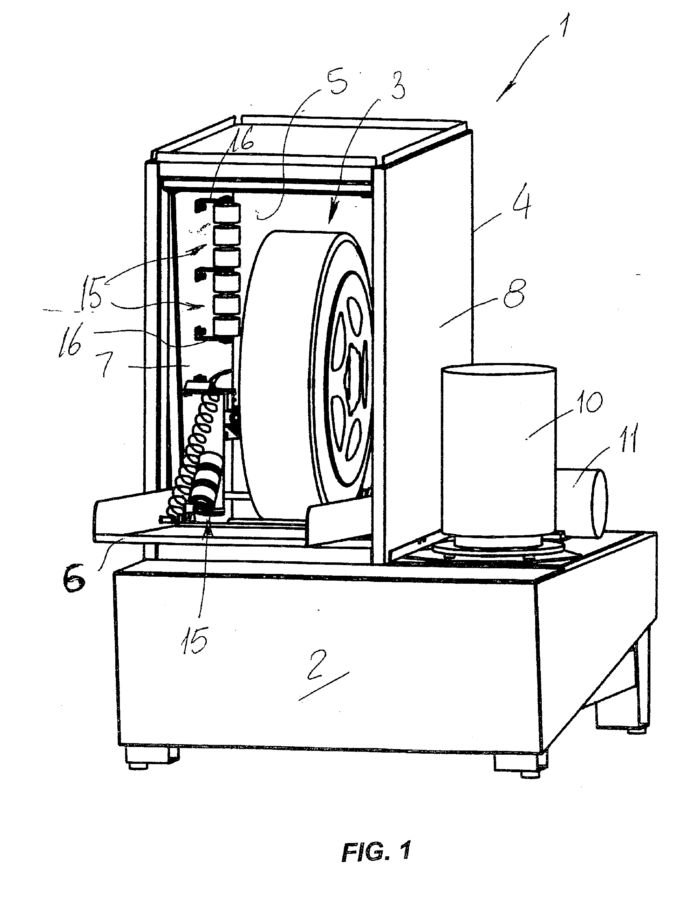

Referring to Figure 1, numeral 1 generally designates a machine for automatically washing and drying wheels 3, hereinafter briefly referred to as machine 1.

More in detail, the machine 1 comprises a frame with a base 2 having a tank (not shown) defined therein, in which the liquid that is used for washing wheels 3, typically vehicle wheels, is collected.

The base 2 has a box-like structure 4 fixed above it, which forms an inner chamber 5 and is closed at three peripheral sides and at the top, whereas the front wall is open and adapted to be closed by a panel 6 that is hinged at the base of the side walls 7 and 8 of the structure 4.

The bottom of the chamber 5 is also normally open, to allow the washing liquid to spontaneously pour by gravity into the lower collection tank.

The members for operating the machine 1, namely a pump unit 10 and a motor unit 11, are mounted beside the structure 4, on the base 2.

Two transverse, parallel and horizontal rollers 12 and 13 are mounted in the chamber 5 that is designed to receive a wheel 3 to be washed and dried, namely in its lower portion, one of such rollers, namely the roller 12 being freely rotatable, whereas the roller 13 is mechanically connected to a coupling 14 for connection to the motor unit 11.

These rollers 12 and 13 provide support to the wheels 3 to be washed and dried, that are arranged in a substantially vertical position, with their center axis of rotation "A" substantially parallel to the two rollers 12 and 13.

Sets of additional rollers 15 are mounted to the side walls 7 and 8 by brackets 16, such rollers being freely rotatable and having the special function of holding the wheels 3 in a vertical or substantially vertical position, as they are being washed and dried, as better explained below.

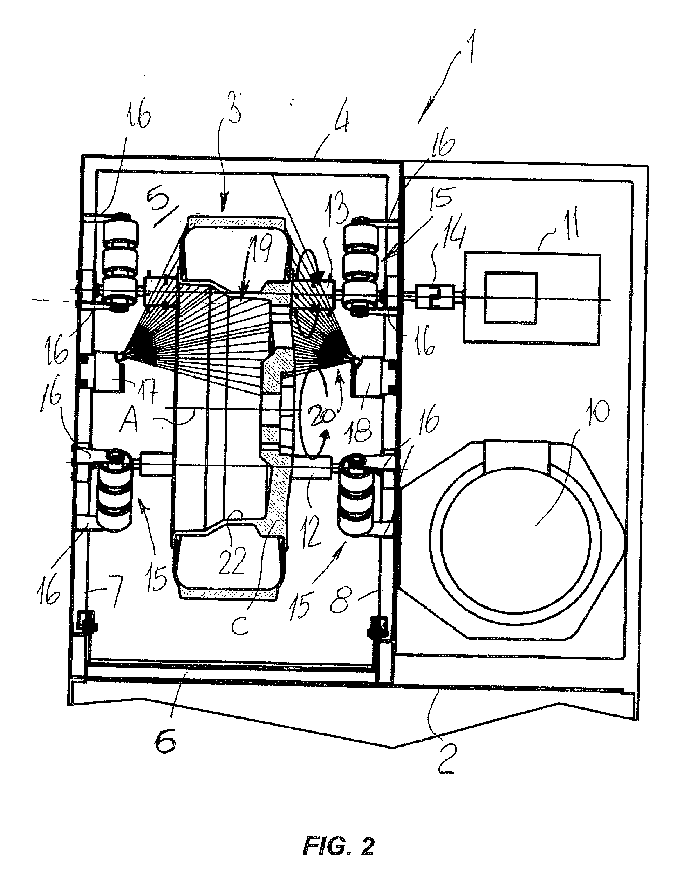

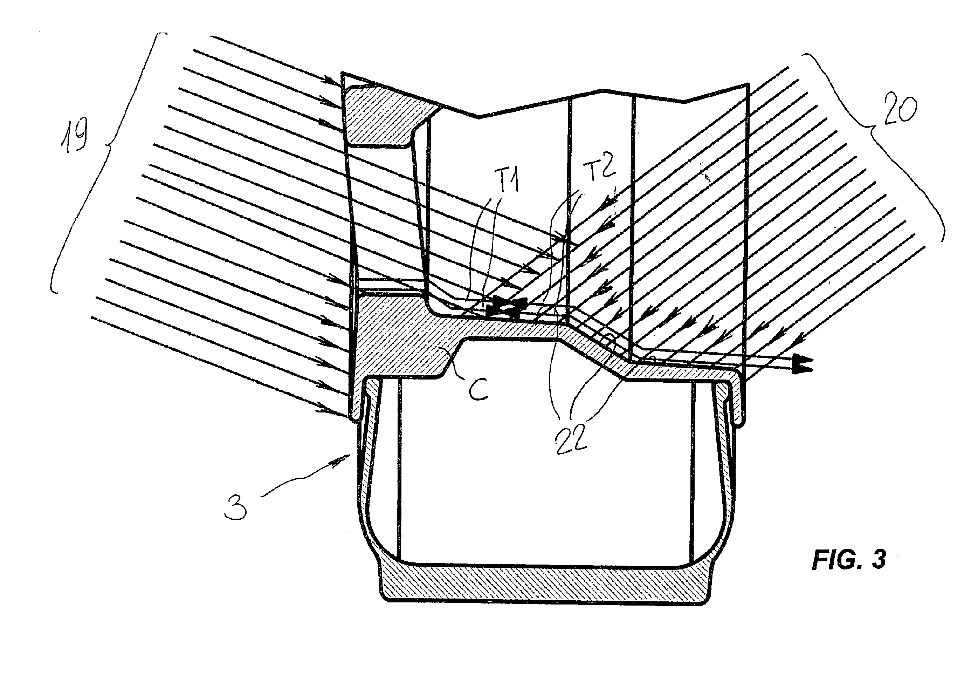

Spraying and drying units, generally referenced 17 and 18, are also mounted to the side walls 7 and 8, and emit jets of a washing liquid or compressed air drying flows toward the opposed faces of a wheel 3, as shown in Figures 2 and 3, and generally referenced 19 and 20.

More in detail, the technical problem that is solved by the invention is shown in Figure 3: as a wheel 3 is being dried, the directions of the compressed air flows 19 and 20, which have predetermined angles of incidence to the opposite faces of a wheel 3, typically generate components perpendicular to the faces of the wheel 3, which oppose to each other, as shown by arrows T1 and T2, thereby reducing drying effectiveness, and hindering normal pouring of the washing liquid from the surfaces of the faces of the wheel 3, particularly the inner surfaces 22 of the rim C.

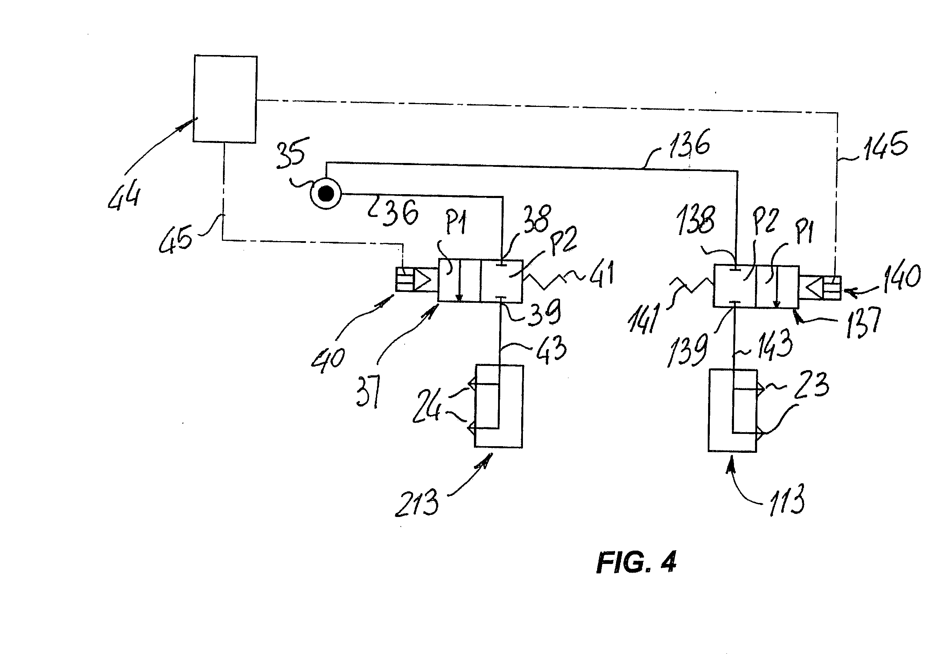

Figures 4, 5, 6 show a first embodiment of a pneumatic diagram of a system for actuating the drying units 113 and 213, which are part of the above mentioned units 17 and 18.

More in detail, numeral 113 designates a first drying unit and 213 designates a second drying unit, each comprising a plurality of ejecting nozzles 23 and 24, which are fed by respective pipes, namely a first pipe 143 and a second pipe 43.

Both the first and second pipes 143 and 43 have first and second distribution valves 137 and 37 respectively, of the type having two operating positions P1 and P2.

As shown in the figures, the position P1 is an open fluid flow position, whereas the position P2 is a closed fluid flow position.

The first and second distribution valves are normally kept in the closed position by elastic means 41 and 141, which are preloaded with an adequate bias force acting upon the spools 40 and 140 of the two valves 37 and 137 respectively.

As shown in the figures, the distribution valves 137 and 37 are reached by a first pipe 136 and a second pipe 36 respectively, which carry compressed air from a common source 35.

An electronic control unit for controlling the operation of the machine 1 is generally referenced 44 and is connected via connecting lines 45 and 145 to the two spools 40 and 140, to actuate them upon request and switch the positions P1 and P2 of the distribution valves 37 and 137.

In the figures, numerals 38 and 138 designate the fluid inlet ports in the distribution valves 37 and 137, whereas numerals 39 and 139 designate the corresponding outlet ports to the two drying units 113 and 213.

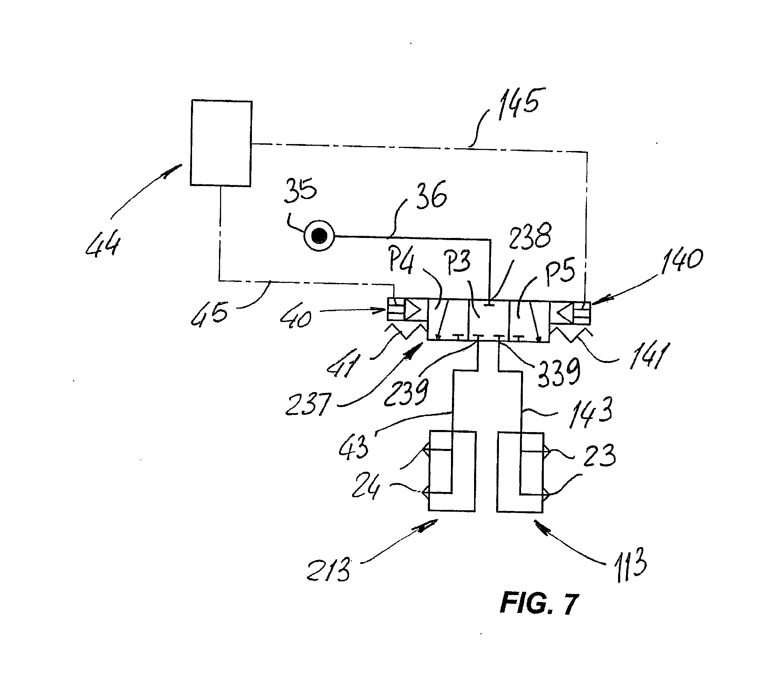

Referring to Figures 7, 8, 9, in which like reference numerals designate like elements of Figures 4, 5, 6, a single pipe 36 is shown to extend from the compressed air source 35, and to end in a port 238 of a distribution valve 237 which has three operating positions in this embodiment, i.e. P3, P4, P5.

More in detail, the two positions P4 and P5 are open positions, allowing the compressed air flows to alternately reach the first drying unit 213 or the second drying unit 113, whereas the central position P3 is a closed position in which the passage of complex air is completely prevented.

The electronic unit for controlling the operation of the machine 1 is referenced 44 also in this embodiment.

The electronic control unit 44 is connected via connection lines 45 and 145 to the ends 40 and 140 of the spool, which controls the positions of the distribution valve 237 to actuate displacement thereof as required.

As shown in the Figures, the distribution valve 237 is normally kept in the closed position P3 by means of opposite bias forces provided by the two preloaded elastic elements 41 and 141.

In Figures 7, 8, 9, numeral 238 designates an inlet port of the valve 237, whereas numerals 239 and 339 designate the outlet ports to the first drying unit 213 and the second drying unit 113 respectively.

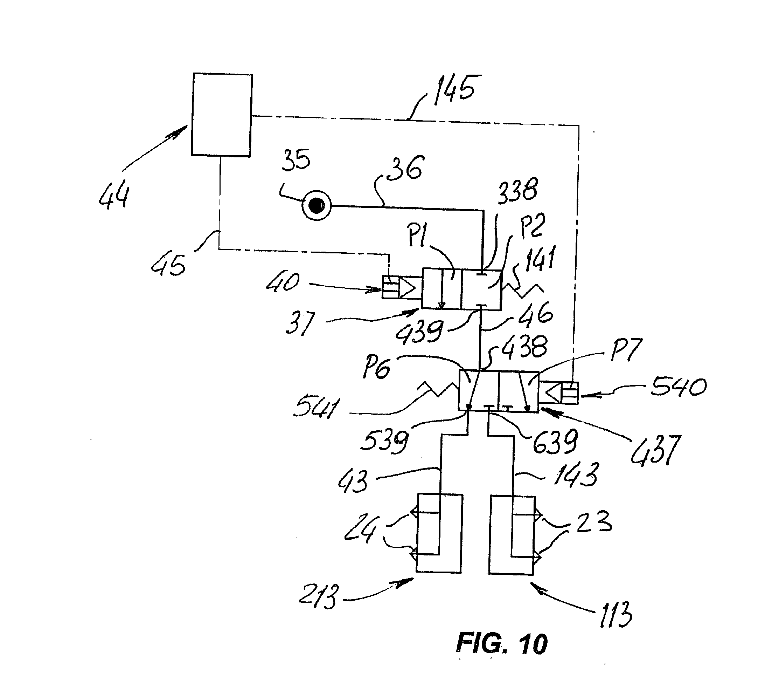

Referring to Figures 10, 11, 12, in which like reference numerals designate like elements of Figures 4, 5, 6, the compressed air source 35 is shown to be connected, by a pipe 36 connected to an inlet port 338, to a first distribution valve 37 having two operating positions, namely an open position P1 and a closed position P2, said valve being normally kept in the closed position P2 by means of a preloaded elastic element 141, which pushes the spool 40 of the valve 37.

The latter is in turn connected to a second distribution valve 437, also having two operating positions designated as P6 and P7, and normally kept in the operating position P6 by a second preloaded elastic element 541, by a further pipe that has one end connected to an outlet port 439 of the first valve 37 and an opposite end connected to an inlet port 438 of the second distribution valve 437, which has two outlet ports 539 and 639 respectively.

The outlet port 539 is connected to the first drying unit 213 by a pipe 43 whereas the outlet port 639 is connected to the second drying unit 113 by a further pipe 143.

Referring to the second distribution valve 437, it shall be noted that the two operating positions P6 and P7 allow alternate communication of the inlet port 438 with one of the outlet ports 538 or 639.

Like in the previous embodiments, an electronic control unit 44 is provided, which is connected to the spools 40 and 540 of the two valves 37 and 437 by means of respective connection lines 45 and 145 to actuate the movements of the two spools and switch the operating positions P1 or P2 and P6 or P7.

The operation of the invention will be now described in detail for each of the above embodiments.

In detail, referring to the first embodiment as shown in Figures 4, 5, 6, in the configuration as shown in Figure 4 the two drying units 213 and 113 are shown to be idle, because the compressed air that is fed by the source 35 and reaches the two distribution valves 37 and 137 is stopped by the latter, which are both kept in the closed configuration P2.

When the machine 1 has completed a washing cycle on a wheel 3, the electronic control unit 44 sends a first signal to the spool of the distribution valve 37, thereby causing it to switch to the open position P1, whereas the distribution valve 137 remains in the closed position P2.

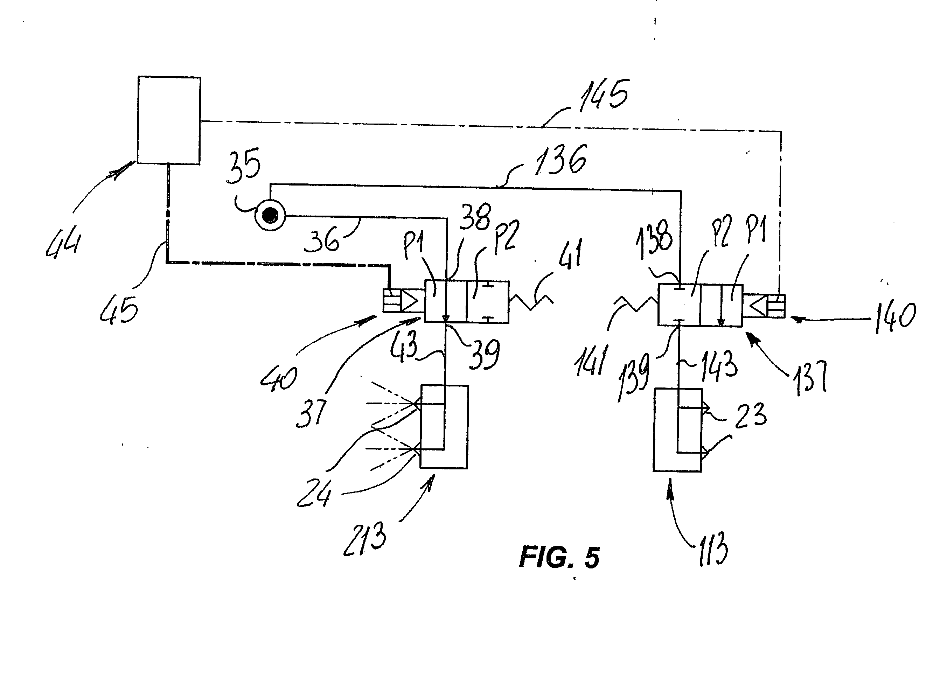

In this configuration, which is shown in Figure 5, only the first drying unit 213 is fed with compressed air, whereas the second unit 113 is idle.

Thus, the wheel 3 to be dried receives the compressed air flow on one face for as long as is required for full removal of the washing water and drying.

At the end of a first drying time, as preset in the electronic control unit 44, the latter sends an actuation pulse to the spool 140 of the distribution valve 137, which switches to the open position P1 and simultaneously stops the actuation pulse to the spool 40 of the distribution valve 37, which switches back to the closed position P2 under the bias of the elastic element 41 that was previously compressed in the open position.

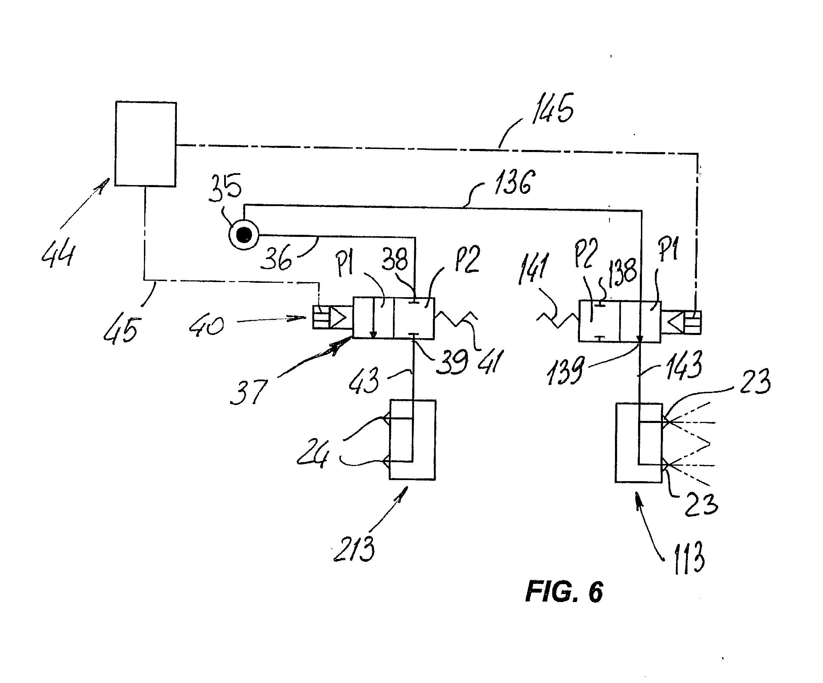

In this configuration, as shown in Figure 6, only the second drying unit 113 is fed with compressed air, whereas the first unit is idle and the wheel 3 to be dried receives a compressed air flow on the face opposite to the previous face, for a second drying time, as preset in the electronic control unit 44.

The operation of the second embodiment as shown in Figures 7, 8, 9 allows alternate and automatic actuation of the two drying units 113 and 213, like in the previous case.

The difference from the above described embodiment is that the two valves 37 and 137 are replaced by a single distribution valve 237 having three operating positions.

As shown in Figure 7, the valve 237 is in the closed configuration P3 and none of the two drying units 113 and 213 is fed with the compressed air generated by the source 35.

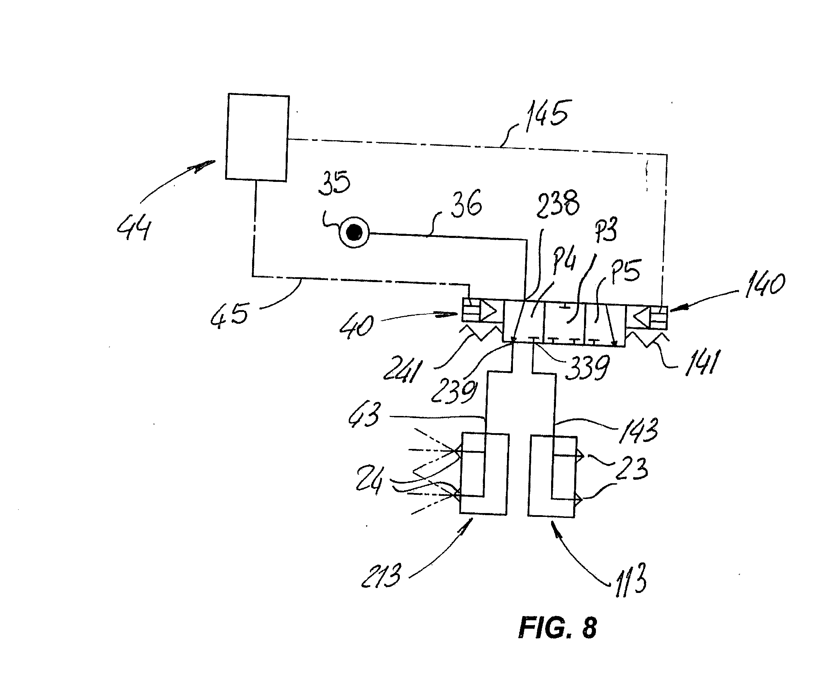

When the washing cycle on the wheel 3 is completed, the electronic control unit 44 sends an actuation pulse through the line 45, e.g. to the end 40 of the spool of the distribution valve 237, which switches to the position P4 as shown in Figure 8, thereby compressing the elastic element 141, whereby the pipe 36 is connected to the pipe 43 and hence with the first drying unit 213 which eject the compressed air flow toward a first face of the wheel 3: this configuration is shown in Figure 8.

At the end of the first drying time, as preset in the electronic control unit 44, the latter, like in the previous case, sends an actuation pulse to the opposite end 140 of the spool of the distribution valve 237 and simultaneously stops the previous pulse to the end 40.

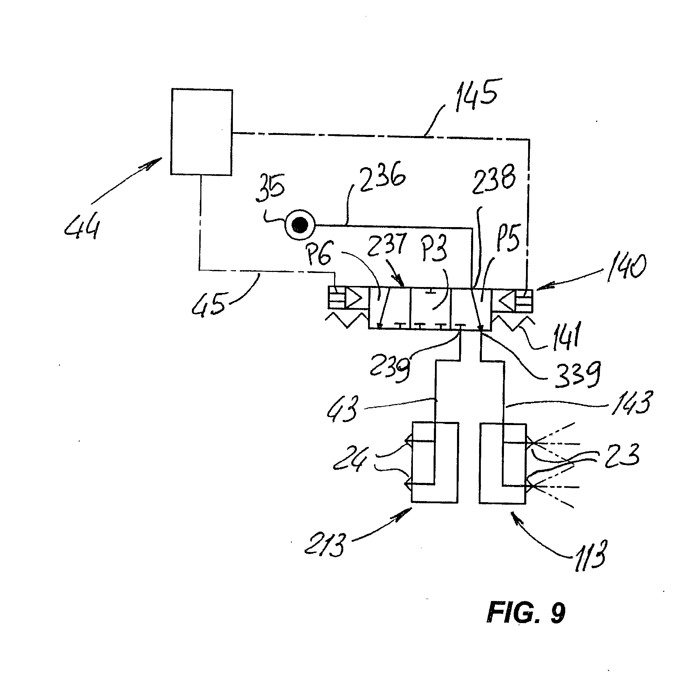

Therefore, the distribution valve 237 switches to the operating position P5 and the compressed air reaches the second drying unit 113, as shown in Figure 9, such unit ejecting the flow of drying compressed air toward the face of the wheel 3 to be dried opposite to the previous face, for a second drying time, as preset in the electronic control unit 44.

As soon as the drying step is completed, the electronic control unit 44 stops pulse transmission, and the elastic elements 41 and 141 restore the valve 237 to the normally closed position P3.

Referring to Figures 10, 11, 12, compressed air delivery is shown, particularly in Figure 10, to be blocked.

The source 35 sends air through the pipe 36 to the inlet port 338 of the first distribution valve 37, which is kept in the closed position P2.

Therefore, in this configuration, i.e. the configuration that is maintained while wheels 3 are being washed, compressed air reaches none of the drying units 113 and 213.

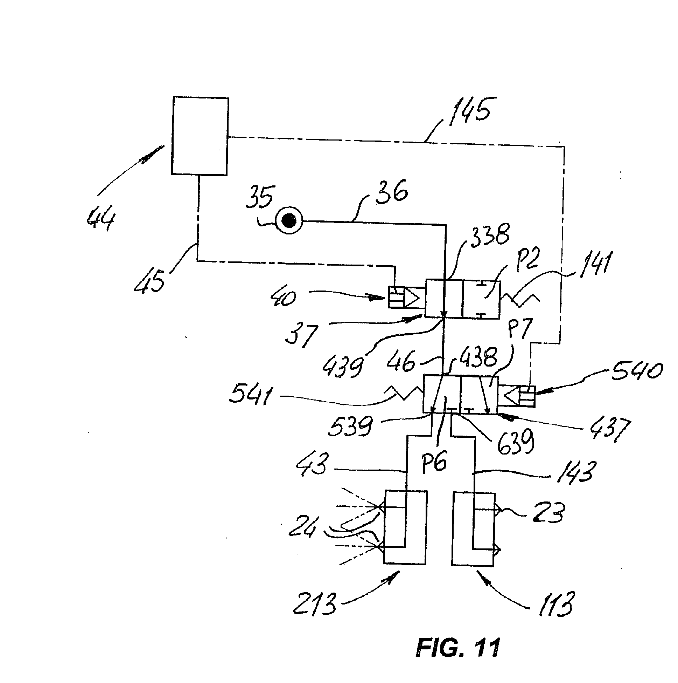

As soon as the washing step is completed, the electronic control unit 44 sends a pulse to the first distribution valve 37 through the line 45 and switches it to the open position P1: this configuration is shown in Figure 11.

In this configuration, compressed air flows into the inlet port 338, flows out of the outlet port 439, flows into the inlet port 438 of the second distribution valve 437 and flows out of the outlet port 539, thereby reaching the first drying unit 213 which ejects drying air flows toward one of the faces of the wheel 3 to be dried.

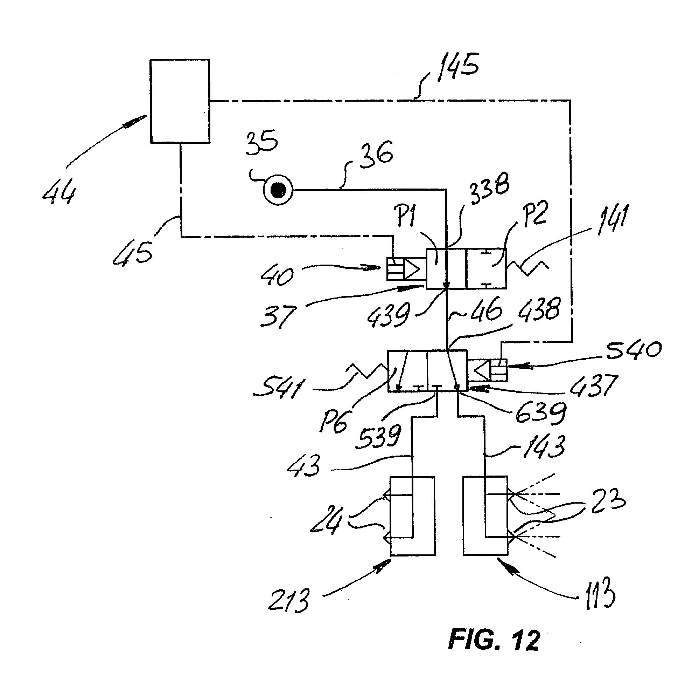

As soon as the predetermined time of actuation of the first drying unit 213 is completed, the electronic control unit 44 sends a switching signal to the second distribution valve 437 which switches to the position P6, preceding the position P7: this configuration is shown in Figure 12.

In this configuration, the compressed air that flows through the first distribution valve 37 reaches the inlet port 438 of the second distribution valve 437, flows out of the outlet port 639 thereof, and feeds the second drying unit 113 which ejects compressed air flows toward the face of the wheel 3 to be dried opposite to the previous face.

When the predetermined time of actuation of the second drying unit 113 is also completed, the electronic control unit 44 stops the signals to both the first distribution valve 37 and the second distribution valve 437, which valves are biased by the action of their respective elastic return elements, and are automatically restored to their respective normal positions, i.e. the closed position P2 for the valve 37 and the distribution position P6 to the first drying unit 213.

In other words, the first distribution valve 37 acts as an ON/OFF switch, whereas the second distribution valve 437 acts as a compressed air flow deflector, deflecting flows toward the first drying unit 213 or toward the second drying unit 113.

It shall be noted that, during washing and drying of the wheels 3, the latter are driven into rotation on the rollers 12 and 13 in the chamber 5, which is kept closed at the top and the periphery, such that all the parts of the surfaces of the opposite faces of the wheels 3 may pass before the spraying and drying units 17 and 18 and be completely impinged upon first by the washing liquid jets and then by the drying air flows.

The latter are emitted alternately by the drying units 113 and 213 do not oppose each other, with the surfaces of the wheels 3 being cleared of washing liquid residues in shorter times.

Furthermore, the drying cycles are repeated twice for each face of each wheel 3, to remove the residual water that may have flown to the opposite surface during a first drying cycle, and vice versa.

Finally, different drying times may be set for the two faces of each wheel 3, to account for the different areas of the surfaces to be dried, and typically to provide longer cycles for the inner surfaces 22 of the rim "C".

The invention was found to fulfill the intended objects.

The invention so conceived is susceptible to a number of changes and variants within the inventive concept as defined in the claims.

Furthermore, all the details may be replaced by other technically equivalent parts.

In practical implementation, any materials, shapes and sizes may be used as needed, without departure from the scope of the following claims.

## Claims

1. A tyre washing machine (1) comprising:
- A frame that shapes a washing station (4) wherein wheels (3) to be washed are designed to be fitted;
- A first spraying set (17) of a washing liquid fitted on a first side of said washing station (4) and a second spraying set (18) fitted on a second opposite side of said washing station (4); and
- A first drying set (213) fitted on said first side of said washing station (4) and a second drying set (113) fitted on said second opposite side of said washing station (4);
**characterized in that** said first drying set (213) and said second drying set (113) can be alternatively actuated by alternative actuating means (44, 35, 37, 137), so as to work with alternated drying cycles.

2. A machine as claimed in claim 1, wherein said first and second drying set comprise:
- A source (35) of a pressurized drying fluid;
- Flowing lines (36, 136) of said fluid from said source (35) toward first drying set (213) and
second drying set (113) arranged in said washing station (4), facing a respective face of a wheel (3) do be dried;
- Control means (37, 137) of said flowing lines (36, 136) designed to selectively connect said source (35) to said first or second drying set (213, 113).

3. A machine as claimed in claim 2, wherein said flowing lines comprise:
- A first connecting duct (143) connecting said source (35) to said first drying set (213) ;
- A second connecting duct (43) connecting said source (35) to said second drying set (113).

4. A machine as claimed in claim 3 of preceding claims, wherein said control means comprise:
- A first valve (137) having at least two switchable working positions (P1, P2) comprising a first connecting position (P1) and a second closing position (P2), fitted on said first duct (143);
- A second valve (37) having at least two switchable working positions (P1, P2) comprising a first connecting position (P1) and a second closing position (P2), fitted on said second duct (43);
- A programmable electronic switching unit (44) of said first valve (137) and second valve (37).

5. A machine as claimed in claim 4 of preceding claims, wherein said first and second valve (137, 37) are normally forced in said closing positions (P2) by forcing elastic means (41, 141).

6. A machine as claimed in claim 1, wherein said first and second drying sets (213, 113) each comprises a first and a second manifold body wherein ends of a first duct (143) and a second duct (43) respectively flow and weherein said first and second drying sets are equipped with a plurality of turnable ejecting nozzles (23, 24).

7. A machine as claimed in claim 1, wherein said alternate drying cycles have.the same duration.

8. A machine as claimed in claim 1, wherein said alternate drying cycles have different duration.

## Patentansprüche

1. Eine Reifenwaschmaschine (1) mit:
- einem Rahmen, der eine Waschstation (4) bildet, in der zu waschende Räder (3) so ausgebildet sind, dass sie einsetzbar sind,
- einem ersten Sprühaggregat (17) mit einer Spülflüssigkeit, das an einer ersten Seite der Waschstation (4) angebaut ist und einem zweiten Sprühaggregat (18), das an einer zweiten, gegenüber liegenden Seite der Waschstation (4) angebaut ist, und
- einem ersten Trocknungsaggregat (213), das an der ersten Seite der Waschstation (4) angebaut ist und einem zweiten Trocknungsaggregat (113), das an der zweiten, gegenüber liegenden Seite der Waschstation (4) angebaut ist,
**dadurch gekennzeichnet, dass** das erste Trocknungsaggregat (213) und das zweite Trocknungsaggregat (113) alternativ betätigt werden können mittels alternativen Betätigungseinrichtungen (44, 35, 37, 137), um mit alternierenden Trocknungszyklen zu arbeiten.

2. Maschine gemäß Anspruch 1, **dadurch gekennzeichnet, dass** das erste und das zweite Trocknungsaggregat umfassen:
- eine Quelle (35) eines Trocknungsfluids unter Druck,
- Fließleitungen (36, 136) für das Fluid von der Quelle (35) zum ersten Trocknungsaggregat (213) und zweiten Trocknungsaggregat (113), die in der Waschstation (4) angeordnet sind gegenüber einer jeweiligen Seite eines zu trocknenden Rades (3),
- Steuereinrichtungen (37, 137) für die Fließleitungen (36, 136), die ausgelegt sind, die Quelle (35) wahlweise mit dem ersten oder zweiten Trocknungsaggregat (213, 113) zu verbinden.

3. Maschine gemäß Anspruch 2, **dadurch gekennzeichnet, dass** die Fließleitungen umfassen:
einen ersten Verbindungskanal (143), der die Quelle (35) mit dem ersten Trocknungsaggregat (213) verbindet,
einen zweiten Verbindungskanal (43), der die Quelle (35) mit dem zweiten Trocknungsaggregat (113) verbindet.

4. Maschine gemäß Anspruch 3 der vorhergehenden Ansprüche, **dadurch gekennzeichnet, dass** die Steuereinrichtungen umfassen:
- ein erstes Ventil (137) mit mindestens zwei schaltbaren Betriebspunkten (P1, P2), die eine erste Verbindungsposition (P1) und eine zweite Schließposition (P2) umfassen, das an dem ersten Kanal (143) angebaut ist,
- ein zweites Ventil (37) mit mindestens zwei schaltbaren Betriebspunkten (P1, P2), die eine erste Verbindungsposition (P1) und eine zweite Schließposition (P2) umfassen, das an dem zweiten Kanal (43) angebaut ist,
- eine programmierbare, elektronische Schalteinheit (44) für das erste Ventil (137) und das zweite Ventil (37).

5. Maschine gemäß Anspruch 4 der vorhergehenden Ansprüche, **dadurch gekennzeichnet, dass** das erste und das zweite Ventil (137, 37) normalerweise in die Schließpositionen (P2) gezwungen sind mittels zwingenden elastischen Einrichtungen (41, 141).

6. Maschine gemäß Anspruch 1, **dadurch gekennzeichnet, dass** die ersten und zweiten Trocknungsaggregate (213, 113) jedes ein erstes und ein zweites Stutzengehäuse umfassen, wobei Enden eines ersten Kanals (143) und eines zweiten Kanals (43) jeweils fließen und wobei die ersten und zweiten Trocknungsaggregate versehen sind mit einer Vielzahl von drehbaren Auslassdüsen (23, 24).

7. Maschine gemäß Anspruch 1, **dadurch gekennzeichnet, dass** die alternierenden Trocknungszyklen die selbe Dauer haben.

8. Maschine gemäß Anspruch 1, **dadurch gekennzeichnet, dass** die alternierenden Trocknungszyklen unterschiedliche Dauer haben.

## Revendications

1. Machine pour le lavage de pneus (1) comprenant:
- un châssis qui définit une station de lavage (4), dans laquelle sont destinées à être placées des roues (3) à laver;
- un premier ensemble de pulvérisation (17) d'un liquide de lavage, monté sur un premier côté de ladite station de lavage (4) et un second ensemble de pulvérisation (18) monté sur un second côté opposé de ladite station de lavage (4); et
- un premier ensemble de séchage (213), monté sur ledit premier côté de ladite station de lavage (4) et un second ensemble de séchage (113) monté sur ledit second côté opposé de ladite station de lavage (4);
caractérisé en ce quel ledit premier ensemble de séchage (213) et ledit second ensemble de séchage (113) peuvent être actionnés alternativement par des moyens d'actionnement alternatif (44, 35, 37, 137), de manière à travailler avec des cycles de séchage alternés.

2. Machine selon la revendication 1, dans laquelle lesdits premier et second ensembles de séchage comprennent:
- une source (35) d'un fluide de séchage sous pression;
- des lignes d'écoulement (36, 136) dudit fluide depuis ladite source (35) vers le premier ensemble de séchage (213) et le second ensemble de séchage (113) disposés dans ladite station de lavage (4) en face d'une respective face d'une roue (3) à sécher;
- des moyens de contrôle (37, 137) desdites lignes d'écoulement (36, 136) conçus pour relier sélectivement ladite source (35) audit premier ou second ensemble de séchage (213, 113).

3. Machine selon la revendication 2, dans laquelle lesdites lignes d'écoulement comprennent:
- un premier conduit de raccordement (143) reliant ladite source (35) audit premier ensemble de séchage (213);
- un second conduit de raccordement (43) reliant ladite source (35) audit second ensemble de séchage (113);

4. Machine selon la revendication 3 des revendications précédentes, dans laquelle lesdits moyens de contrôle comprennent:
- une première soupape (137) ayant au moins deux positions de travail commutables (P1, P2) comprenant une première position de raccordement (P1) et une seconde positon de fermeture (P2), montée sur ledit premier conduit (143);
- une seconde soupape (37) ayant au moins deux positions de travail commutables (P1, P2) comprenant une première position de raccordement (P1) et une seconde positon de fermeture (P2), montée sur ledit second conduit (43);
- une unité de commutation électronique programmable (44) desdites première soupape (137) e seconde soupape (37).

5. Machine selon la revendication 4 des revendications précédentes, dans laquelle lesdites première et seconde soupapes (137, 37) sont normalement forcées dans ledites positions de fermeture (P2) par des moyens de forçage (41, 141).

6. Machine selon la revendication 1, dans laquelle lesdits premier et second ensembles de séchage (213, 113) comprennent chacun un premier et un second corps de collecteur vers lequel confluent les extrémités respectivement d'un premier conduit (143) et d'un second conduit (43) et dans laquelle lesdits premier et second ensembles de séchage sont pourvus d'une pluralité de buses d'éjection tournantes (23, 24).

7. Machine selon la revendication 1, dans laquelle lesdits cycles de séchages alternés ont la même durée.

8. Machine selon la revendication 1, dans laquelle lesdits cycles de séchages alternés ont des durées différentes.
